# EUROPEAN PATENT SPECIFICATION

(11) **EP 4 200 554 B1**
(45) Date of publication and mention of the grant of the patent: **18.12.2024**
(21) Application number: 21765645.3
(22) Date of filing: 19.08.2021
(51) Int. Cl.: G01F 23/263, G01F 23/80, F17C 13/02

(54) **SYSTEM AND METHOD FOR DIGITALLY MONITORING A PRESSURE VESSEL**
SYSTEM UND VERFAHREN ZUR DIGITALEN ÜBERWACHUNG EINES DRUCKBEHÄLTERS
SYSTÈME ET PROCÉDÉ DE SURVEILLANCE NUMÉRIQUE D'UN RÉCIPIENT SOUS PRESSION

(30) Priority: 20.08.2020 EP 20191894
(43) Date of publication of application: 28.06.2023
(73) Proprietor: Hexagon Ragasco AS, 2831 Raufoss (NO)
(72) Inventor: JENSRUD, Vegard, 2830 Raufoss (NO)
(74) Representative: Onsagers AS
(86) International application number: PCT/EP2021/073093
(87) International publication number: WO 2022/038249

(56) References cited:
- WO-A1-2015/145468
- WO-A1-2016/112037
- WO-A1-2018/071989
- WO-A1-2018/225010
- CA-A1- 2 113 774
- CN-A- 105 091 979
- CN-A- 108 471 811
- CN-A- 110 631 655
- JP-B2- 5 690 641
- US-A- 5 230 439
- US-A- 5 582 016
- US-A- 5 726 908
- US-A- 6 016 697
- US-A1- 2006 144 140
- US-A1- 2009 301 190
- US-A1- 2013 166 175
- US-A1- 2013 276 533
- US-A1- 2016 254 844
- US-A1- 2019 242 527
- US-B1- 6 712 276
- US-B2- 10 066 979
- US-B2- 10 119 657
- US-B2- 7 159 774
- US-B2- 7 997 132
- US-B2- 8 393 209
- US-B2- 9 103 920

## Description

### TECHNICAL FIELD

The present invention regards a system and method for digitally monitoring a pressure vessel, and more particularly a system and method for digitally monitoring the level of gas in liquid phase in a pressure vessel using a sensor unit connected to the pressure vessel.

### BACKGROUND OF THE INVENTION

Pressure vessels are widely used over the world to store a wide range of gasses. The gasses are used in fuelling vehicles, in cocking, in oxygen and air pressure vessels used for breathing, pressure vessels used for welding and many other areas. Gasses that is used can be propane, butane, CO₂, O₂, air and many more.

There are several types of pressure cylinders in use, containers made of metals, containers made of composite, and other plastic material, and combinations of these materials. The containers made of composite material can be with or without an inner liner and with or without an outer cover.

Keeping track of the condition of the container and the gas level of the container is important in order to ensure that the container is working properly and to keep track of the fill level of the container. On metal containers the level can be measured by controlling the weight of the container of you have to anticipate the level by the use of the container. Further it is also possible to measure the level of a metal container using ultrasonic waves. Using a composite container, the level of the liquid can be seen through the composite material. In addition, there can be placed a pressure gauge that monitors the pressure in the container.

US20190178696A1 described herein are embodiments of a system for monitoring and detecting a level of a tank storing a material. The system may be used in deciding of whether and/or when to provide additional material to the tank, to refill the tank partially or entirely. In some embodiments, the tank may be disposed at a premise such as a residence or commercial building and the system may be disposed in part at that premises to monitor the level of the material in the tank. In some embodiments, the material may be a fuel and the tank may be a fuel tank, to provide fuel to utilities equipment at the premises. In other embodiments, the tank may include other materials, such as other utilities materials. In some embodiments, the utilities material may be potable water.

US20090301190A1 regards a capacitance sensor assembly for detecting relative movement or position between obj ects, such as amount of gas left in a tank or reservoir, movement of one machine component with respect to another, and so on, includes one or more antenna probes connected to an integrated chip normally associated with touch-screen displays. Each antenna probe operates independently and may be formed as insulated conductive wires or conductive traces between layers of a stiff or flexible substrate, such as a Printed Circuit Board (PCB), with the substrate material serving as the insulating layers. Each antenna probe has a different length representing different measurement positions or locations between the objects being measured to provide dynamic calibration of the measurement under changing environmental conditions.

A problem with the solutions presented above is that the solutions are intended for measuring the level of fuel in a tank like a fuel tank on a vehicle or similar where the fuel is naturally in liquid form at atmospheric pressure. In these solutions the tank is not a pressurized tank and the tank is connected to a vehicle or a place where the supply of energy to the sensor system is not a problem.

The problem with free standing pressure vessels like e.g. LPG pressure vessels or oxygen pressure vessels is the severe risk of explosion if it leaks. Another problem is that pressure vessels like these can be standing outside and sometimes in remote areas, which makes changing or recharging power sources hard if you were to add sensors that need a power supply to the pressure vessels. Also, if the gas under pressure is a gas that is explosive, there is an issue with what type of energy source that can be used.

### SUMMARY OF INVENTION

The present invention is set forth and characterized in the independent claims, while the dependent claims describe other characteristics of the invention.

In one aspect, the invention provides a system for measuring the level of gas in liquid form in a composite pressure vessel that uses electrical capacitance to perform the measuring, wherein the system comprises: a capacitive measuring unit for measuring the level of gas in liquid form in the pressure vessel, at least two sensor electrodes connected to the capacitive measuring unit, a communication unit for communicating the information measured by the capacitive measuring unit, a power unit for supplying power to the at least one of the at least two electrodes, to the capacitive measuring unit and to the communication unit.

The composite pressure vessel can be made of at least a gas tight inner liner inside a layer of composite material, wherein the system is in the form of a sensor unit attachable to the outside of the liner of the composite pressure vessel.

Further, the at least two electrodes comprise at least one transmitting electrode and at least one receiving electrode with interdigitized fingers.

The capacitive measuring unit and the sensor electrodes are in the form of an elongated strip arranged to extend substantially the vertical height of an inner liner of the composite pressure vessel.

A sensor unit can have a reference point situated near a first end of the sensor unit to be arranged on the composite pressure vessel at a level where the gas always is in liquid form and a reference point situated near a second end of the sensor unit to be arranged on the composite pressure vessel at a level where the gas is always in gas form.

The power unit can be an energy harvester.

The communication unit can be a short-range radio communication unit for communicating information measured by the capacitive measuring unit to a receiver.

The information displayed to the user can be either the amount of gas left in the pressure vessel or the amount of gas in liquid form in the container.

The receiver can be a display situated on the composite pressure vessel displaying the amount of gas left in the composite pressure vessel.

The system can further comprise a temperature sensor, a pressure sensor and a memory unit.

A second aspect of the present invention regards a method for digitally monitoring the level of gas in liquid form of a composite pressure vessel made of at least a gas tight inner liner inside a layer of composite material, wherein the system comprises a sensor unit attached to the liner of the composite pressure vessel that uses electrical capacitance to measure the amount of gas present in the vessel, wherein the sensor unit comprises: - a capacitive measuring unit for detecting the amount of gas in the pressure vessel, - at least two sensor electrodes connected to the capacitive measuring unit, - a communication unit for communicating the amount of gas left detected by the capacitive measuring unit, and a power unit for supplying power to the capacitive measuring unit, the electrodes and the communication unit; wherein the method comprises the following steps: supplying power from the power unit to the capacitive measuring unit and the communication unit; measuring the amount of gas present in the composite pressure vessel with the capacitive measuring unit, communicating the measured amount of gas left with the communication unit to a memory unit, storing the measured amount of gas in the composite pressure vessel in the memory and/or a receiver and/or a user, and/or displaying the information to a user.

In one aspect the sensor unit is attached to the outside of the liner of the composite pressure vessel.

The power unit can be an energy harvester that gathers energy from an ambient radio frequency spectrum.

The receiver can in one aspect be an IoT Gateway that can receive information from a plurality of the pressure vessels.

The system can comprise a temperature sensor for measuring the temperature of the composite pressure vessel when the capacitive measuring unit measures the level of gas in liquid form in the composite pressure vessel.

The composite pressure vessel can be a cylindrical vessel arranged for a vertical alignment of the cylinder axis, wherein the sensor unit is arranged vertically on the inner liner.

This solution provides a digitally monitoring of the fill level of a pressure vessel that is safe to use on any pressure vessel and that is maintenance free and self-calibrating.

### BRIEF DESCRIPTION OF THE DRAWINGS

Following drawings are appended to facilitate the understanding of the invention. The drawings show embodiments of the invention, which will now be described by way of example only, where:
Fig. 1 is a perspective view of a partial cut through of a composite pressure vessel where the sensor unit is connected to a gas tight liner of the composite pressure vessel.
Fig. 2a is a drawing of an embodiment of the present invention illustrating how the invention works.
Fig. 2b is a detailed drawing of the sensor unit.
Fig. 3 is an illustration of how the sensor unit can communicate with the user of the system, communicating using Bluetooth Low Energy (BLE) to a mobile device.
Fig. 4 is an illustration of the sensor unit communicating using BLE to a gateway capable of distributing the information via the internet to a remote destination.
Fig. 5a is an illustration of the systems presented in fig. 3 where the flow of the information between the different parts of the systems is indicated.
Fig. 5b is an illustration of the systems presented in fig. 4 where the flow of the information between the different parts of the systems is indicated.
Fig. 6 is a detailed image of the embodiment presented in figure 4 wherein all the steps of the process and information flow is indicated.

### DETAILED DESCRIPTION

In the following, embodiments of the invention will be discussed in more detail with reference to the appended drawings. It should be understood, however, that the drawings are not intended to limit the invention to the subject-matter depicted in the drawings.

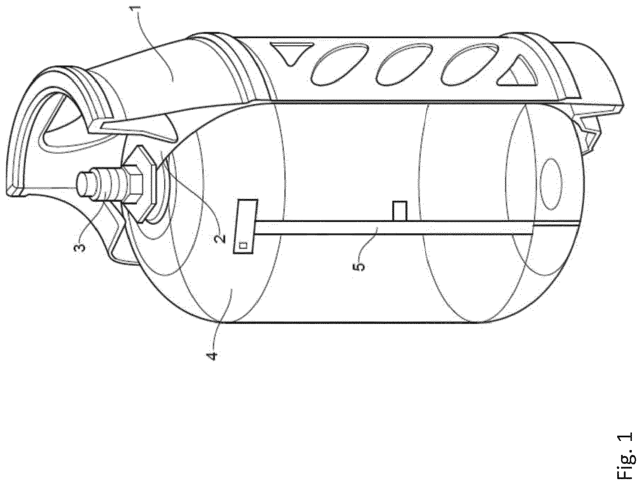

Fig. 1 is a perspective view of a partial cut through of a composite pressure vessel where the sensor unit 5 is connected to a gas tight liner 4 of the composite pressure vessel. A composite pressure vessel for storing gas and/or liquified gas may comprise an inner gas tight liner 4, surrounded by a pressure resistant composite layer 2 of fibres and polymer. The liner 4 and the composite layer 2 comprise at least one common opening wherein a boss is arranged. The boss provides for attaching a valve 3 which is the inlet/outlet means for controlling the flow of fluid in and out of the pressure vessel. An outer casing 1 surrounds the composite layer 2 and provides protection against impact. The outer casing 1 may further provide a stand supporting a vertical arrangement of a cylindrical pressure vessel. The casing 1 may include other features such as handles for transport and adapting the bottom surface and the top surface to each other to allow stacking.

The sensor unit 5 is placed on the side of the liner 4 of the composite pressure vessel. The sensor unit 5 is comprised of sensor electrodes 9 and a capacitive measuring unit 8. The sensor unit 5 has two reference points 6, 11. A first reference point 11 is positioned towards the lower end of the liner 4. This is a reference point for gas in liquid phase. Towards the top end of the liner 4 there is placed a second reference point 6 which is a reference point 6 for gas in gas phase.

The sensor unit 5 can be placed on the inside and outside of the liner 4, on the inside and on the outside of the composite material and on the inside and on the outside of the plastic cover.

The more material there is between the sensor unit 5 and the gas in the pressure vessel the more power is required to perform the measurements. The preferred placements of the sensor unit 5 are therefore as close to the gas as possible without being in contact with it like on the outside of the liner 4 on the composite pressure vessel.

For the sensor unit 5 to function properly the sensor unit 5 is glued to the side of the liner 4. It is important that there is proper contact between the sensor unit 5 and the vessel since the sensor unit 5 must stretch together with the pressure vessel to get accurate measurements.

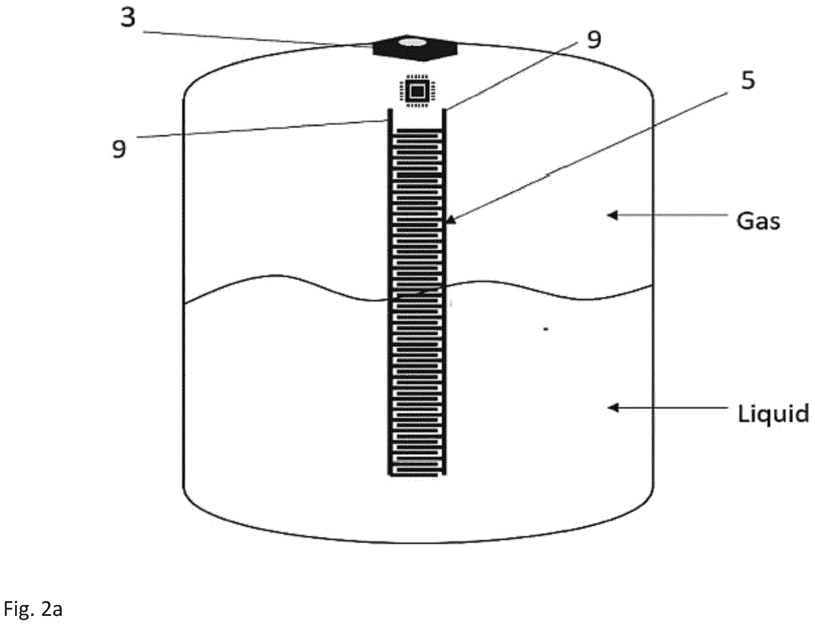

Fig. 2a is a drawing of an embodiment of the present invention illustrating the principle of the invention. The sensor unit 5 is capable of measuring absolute and relative change in the electrical field between at least two electrodes. The electrodes can be copper wires or traces or more suitable geometric shapes such as interdigitated finger pattern, semi-circular pattern or other patterns recognized suitable for those skilled in the art. The ideal pattern utilized is one with high degree of change in Electrical Field/Capacitance while being immune to external noise sources such as a second Electrical Field. In its simplest embodiment the two sensor electrodes 9 form an Electrical Capacitor. This capacitor will be perturbed by the change in dielectric constant along the sensor electrodes 9 based on the amount of liquid gas present in the vessel.

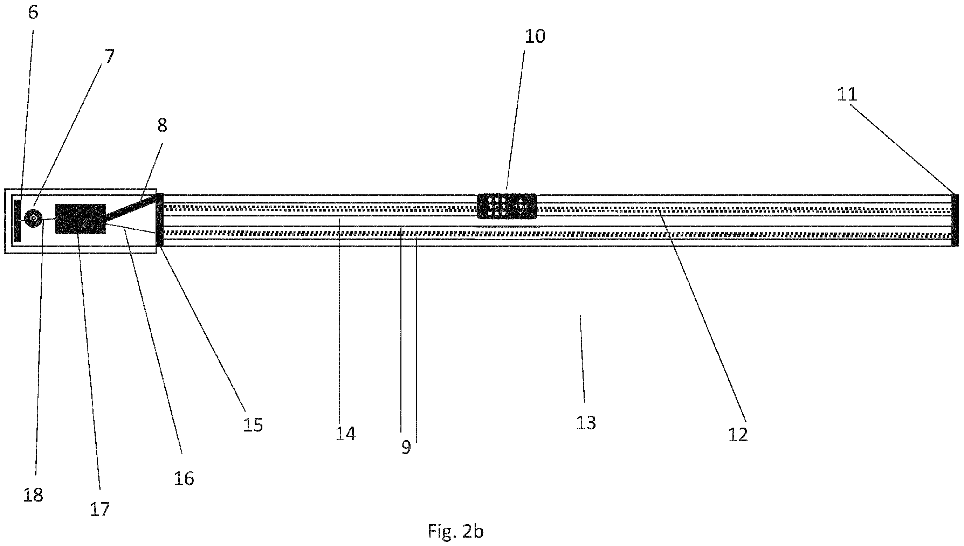

Fig. 2b is a drawing of the sensor unit 5 and the parts it is composed of. In a preferred embodiment of the present invention the sensor unit 5 is in the form of a capacitive measuring unit 8 and sensor electrodes 9. At the first end of the sensor unit 5 there is a reference point 6. This reference point 6 is measuring gas in gas phase. This reference point 6 is placed above the maximum fill level of the pressure vessel. At the opposite end of the sensor unit 5 there is another reference point 11 measuring gas in liquid phase. This reference point 11 measures the gas in liquid phase. If both reference points 6, 11 show the same reading the pressure vessel is either empty and needs refilling or it is overfilled.

The sensor unit 5 has a Bluetooth transmitter, preferably a Bluetooth Low Energy (BLE) transmitter 7. This transmitter can transmit the information gathered by the sensors to a receiver. The receiver can be a mobile phone wherein the measured information can be showed in an app on the phone. Alternatively, the receiver can be an IoT gateway which transmits the information to an internet server where the information can be accessed by a user.

The sensor unit 5 can also be comprised of a pressure sensor 10 and a temperature sensor 18. These sensors can contribute to the surveillance of the condition of the pressure vessel, but they are not necessary to measure the level of the gas in liquid phase.

The pressure sensor can be made up of a double E capacitive sensor. This sensor expands and contract as the pressure in the tank either increases or decreases. The capacitance changes in relation to the expansion and contraction of the sensor. The close contact between the sensor and the pressure vessel has a positive effect on the accuracy of the sensor. Preferably the sensor is either attached to the pressure vessel using a strong adhesive or the sensor is embedded in either the liner, the composite material or the outer casing.

To be able to perform the measurements and to transmit the measurements via BLE, the sensor unit 5 needs a power source. In a preferred embodiment of the present invention the power is supplied by an energy harvesting chip like the chip described in patent applications NO20170555, NO 20181285, NO20181286 and NO20181283. This energy harvesting chip gathers energy from radio waves. In an alternative solution the energy can be harvested by using solar panels attached to the pressure vessel. Both solutions have the benefit that they are maintenance free since they do not need to be recharged in the same way as a battery need. However, a battery can also be used as a power source.

The sensor unit 5 can also be fitted with a memory unit 16. This allows the capacitive measuring unit 8 to store the measurements if the pressure vessel is not in contact with a Bluetooth receiver.

On the backside of the sensor unit 5 there is a layer of adhesive material which ensures that the sensor unit 5 has a good attachment to the surface of the pressure vessel it is attached to.

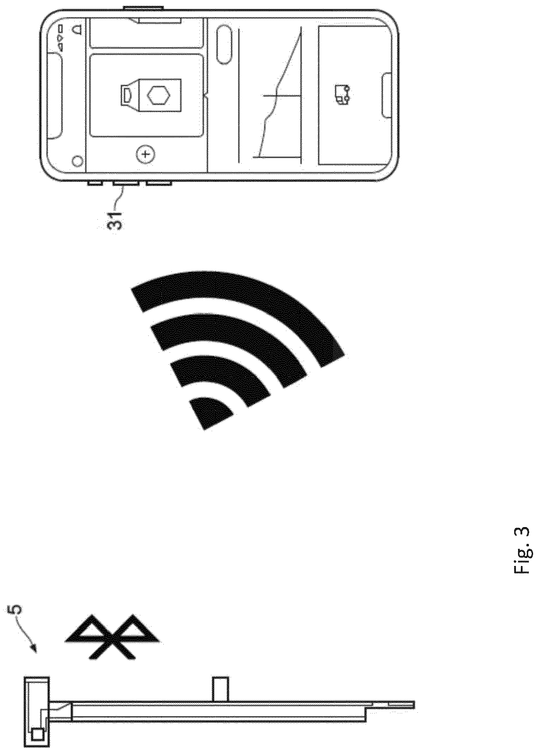

Fig. 3 is an illustration of how the sensor unit 5 can communicate with the user of the system, communicating using BLE 7 to a mobile device 31. This solution allows the user to be able to access the information gathered by the sensor unit 5 and check the level of gas left in the pressure vessel. The connection can be initiated by the user or by the BLE 7 on the sensor unit 5. If it is accessed by the user, the latest stored information can be transmitted, or the sensor unit 5 can perform an on the spot measurement. Alternatively, the BLE 7 on the sensor unit 5 can initiate a transmission of information if the receiver is within transmitting range. The information is in the form of the level of gas in liquid phase in the pressure vessel. The app in the mobile device will be able to keep track of the gas level in the pressure vessel.

The information can be shown to the user as either the level of gas in liquid phase or as the amount of gas left in the pressure vessel. The amount of gas left in the pressure vessel is calculated using the level of gas in liquid phase, the pressure in the pressure vessel and the volume of the pressure vessel. The amount of gas left in the pressure vessel can be displayed as a percentage of the maximum amount of gas allowed in the pressure vessel.

If the app registers that the pressure in the vessel is reduced without it being in use an alarm can be given. Further if the sensor unit 5 registers that the gas level in the container is rapidly decreasing it can transmit an alarm to the receiver that something might be wrong.

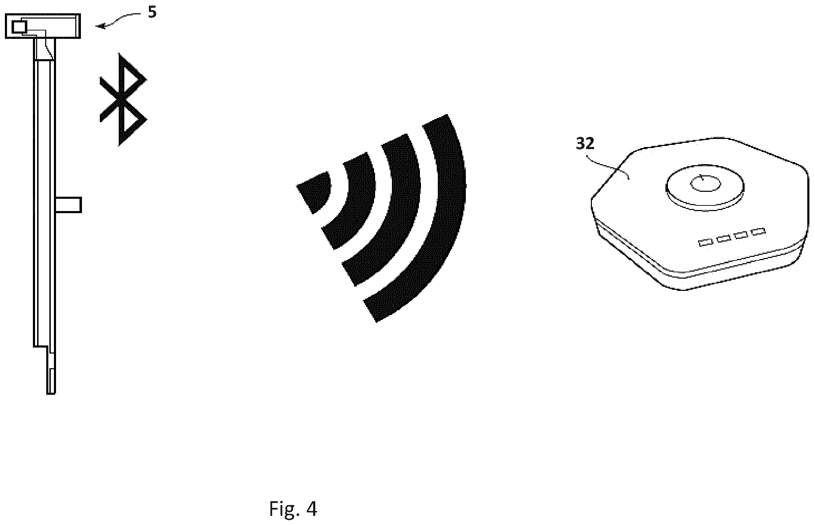

Fig. 4 is an illustration of the sensor unit 5 communicating using BLE 7 to a gateway 32 capable of distributing the information via the internet to a remote destination. In an alternative solution the BLE 7 on the pressure vessel can be connected to a receiver in the form of an Internet of Things (IoT) gateway. The gateway can transmit the measured information to an Internet database where the information can be accessed by a third party. This solution allows the pressure vessel supplier with a possibility to keep track of the gas level in the pressure vessels. This allows them to change the gas for a customer without the customers involvement. In this solution several pressure vessels can be connected to one IoT gateway, wherein each of the pressure vessels has a sensor unit 5 attached in order to transmit their individual level via the IoT gateway to the service provider.

Further the service provider can be informed if there are any unnatural leakage of gas from the pressure vessel.

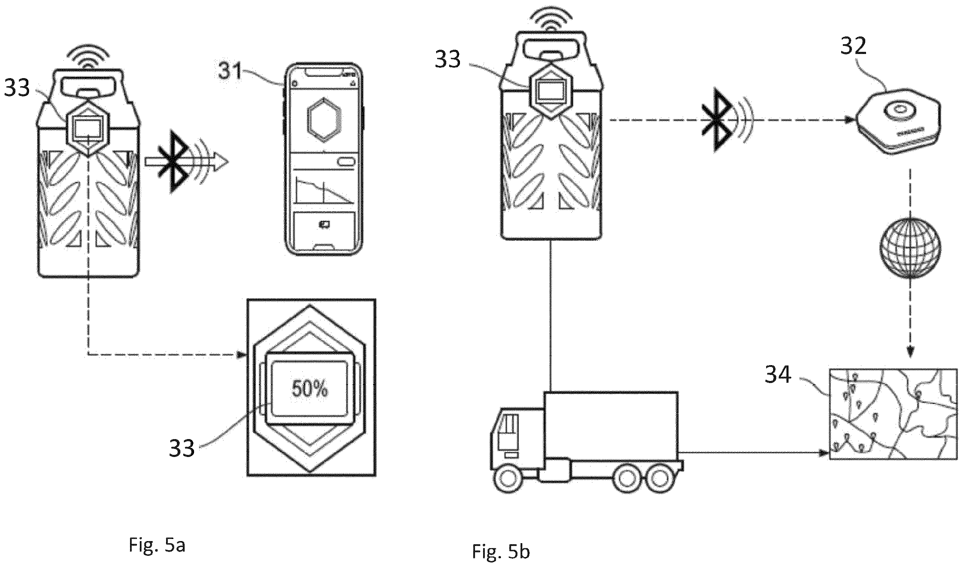

Fig. 5a is an illustration of the systems presented in fig. 3 where the flow of the information between the different parties of the systems is indicated. The sensor unit 5 attached to the composite pressure vessel sends the measured information to a mobile communication device 31 when it is within range of the communication unit 7 of the system. The measured information can be displayed in an app on the mobile communication device 31. If the displayed information reveals that the composite pressure vessel is empty, or close to empty the user can change the composite pressure vessel to a new filled composite pressure vessel. As an alternative solution the measured information can be displayed on a digital display 33 situated on the pressure vessel. The digital display 33 can be in addition to the app om the mobile communication device 31. Alternatively, the digital display 33 can be instead of the app on the mobile communication device.

Fig. 5b is an illustration of the systems presented in and fig. 4 where the flow of the information between the different parties of the systems is indicated. The communication device of the composite pressure vessel sends the measured information to an internet gateway 32. The internet gateway 32 sends the information to e.g. a site on the internet. The information can be accessed by a third party 34. The third party can be a supplier of composite pressure vessels. When the measured gas level of the composite pressure vessel shows that it is below a set threshold level the supplier can change the pressure vessel to a full one. The supplier can keep track of multiple pressure vessel placed in multiple places.

In order to keep track of the individual pressure vessels each vessel can be fitted with a unique ID. This makes it possible to store historical data related to each individual composite pressure vessel. The location of all the pressure vessel that the supplier is responsible for can be displayed in a map in order to make it easier for the supplier to find out where an empty pressure vessel is located. Alternatively, it can be stored as information in a data sheet.

When an empty pressure vessel is collected the supplier can fill the vessel and relocate it to another location. The supplier can put in the new location of the pressure vessel into datasheet or mark it on the map. Alternatively, each composite pressure vessel can be fitted with a satellite navigation unit that allows the supplier to keep track of the pressure vessel in real time. This makes it possible to keep track of the pressure vessel even if it has been moved.

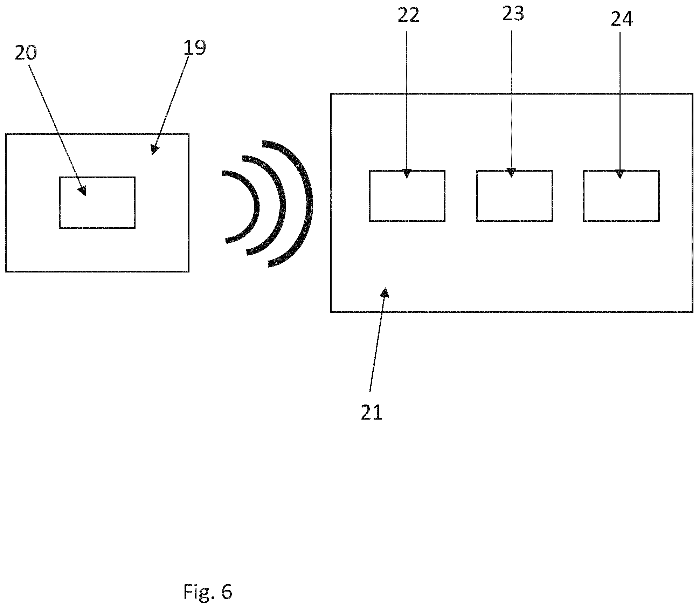

Fig. 6 is a detailed image of the embodiment presented in figure 4 wherein all the steps of the process and information flow is indicated. It is displayed that the composite pressure vessel (LPG Cylinder) 19 has an asset management platform 20. This platform 20 collects information about the individual pressure vessels 19. The collected data is sent to a Multicloud Management Platform (MCMP) 21. The MCMP 21 is comprised of a billing, rating and payment module 22 that keeps track of the billing, rating and payment related to each individual pressure vessel 19. Further the MCMP 21 can have a data management module 23. The data management module 23 stores and analyses the information sent from each pressure vessel 19. It can further keep track of the technical information related to each pressure vessel 19. Further the MCMP 21 can have one or more communication interfaces 24. The communication interfaces 24 can be a web interface, it can be a telecommunication interface (GSM networks) and additional networks like satellite navigation interface like GPS interface (Tracking device).

In addition to only measuring the gas level of the pressure vessel it is possible to keep track of the number of times the pressure vessel has been refilled.

### REFERENCE LIST:

1: Casing
2: Composite layer
3: Valve
4: Inner liner
5: Sensor unit
6: Point of reference «always gas phase»
7: Bluetooth Low Energy transmitter/communication unit
8: Capacitive measuring unit
9: Sensor electrodes
10: Pressure sensor
11: Point of reference «always liquid phase»
12: Flex
13: Backside surface
14: Capacitance measuring line
15: NTC
16: Memory unit
17: Power unit/energy harvester
18: Temperature sensor
19: Composite pressure vessel (LPG Cylinder)
20: Asset management platform
21: Multicloud Management Platform (MCMP)
22: Billing, rating and payment module
23: Data management module
24: Communication interface
31: Mobile device
32: Gateway
33: Digital display
34: Third party receiver

## Claims

1. System for measuring the level of gas in liquid form in a composite pressure vessel that uses electrical capacitance to perform the measuring wherein the system comprises:
• a capacitive measuring unit (8) for measuring the level of gas in liquid form in the pressure vessel,
• at least two sensor electrodes (9) connected to the capacitive measuring unit (8),
• a communication unit (7) for communicating the information measured by the capacitive measuring unit (8), and
• a power unit (17) for supplying power to at least one of the at least two electrodes, the capacitive measuring unit (8) and the communication unit (7), **characterised in that**
the capacitive measuring unit (8) and the sensor electrodes (9) is in the form of an elongated strip arranged to extend substantially the vertical height of an inner liner of the composite pressure vessel.

2. System according to claim 1 wherein the at least two electrodes comprise at least one transmitting electrode and at least one receiving electrode with interdigitized fingers.

3. System according to claim 2 wherein a sensor unit (5) has a reference point (11) situated near a first end of the sensor unit (5) to be arranged on the composite pressure vessel at a level where the gas always is in liquid form and a reference point (6) situated near a second end of the sensor unit (5) to be arranged on the composite pressure vessel at a level where the gas is always in gas form.

4. System according to any one of the claims 1-3 wherein the power unit (17) is an energy harvester (17).

5. System according to any one of the claims 1-4 wherein the communication unit (7) is a short-range radio communication unit (7) for communicating information measured by the capacitive measuring unit (8) to a receiver (31, 32, 33, 34).

6. System according to claim 5 wherein the information displayed to the user can be either the amount of gas left in the pressure vessel or the amount of gas in liquid form in the vessel.

7. System according to claim 5 wherein the receiver is a display (33) situated on the composite pressure vessel displaying the amount of gas left in the composite pressure vessel.

8. System according to any one of the claims 1-7 wherein the system further comprises a temperature sensor (18), a pressure sensor (10) and a memory unit (16).

9. Method for digitally monitoring the level of gas in liquid form in a composite pressure vessel made of at least a gas tight inner liner (4) inside a layer of composite material, wherein the system comprises a sensor unit (5) attached to the liner of the composite pressure vessel that uses electrical capacitance to measure the amount of gas present in the vessel, wherein the sensor unit (5) comprises: - a capacitive measuring unit (8) for detecting the amount of gas in the pressure vessel, - at least two sensor electrodes (9) connected to the capacitive measuring unit (8), the capacitive measuring unit (8) and the sensor electrodes (9) is in the form of an elongated strip arranged to extend substantially the vertical height of an inner liner of the composite pressure vessel, - a communication unit (7) for communicating the amount of gas left detected by the capacitive measuring unit (8), and a power unit (17) for supplying power to the capacitive measuring unit (8), the electrodes (9) and the communication unit (7);
wherein the method comprises the following steps:
• supplying power from the power unit (17) to the capacitive measuring unit (8), at least one of the electrodes (9) and the communication unit (7);
• measuring the amount of gas present in the composite pressure vessel with the capacitive measuring unit (8) utilizing absolute or relative changes in electrical capacitance,
• communicating the measured amount of gas present with the communication unit (7) to
i. a memory unit (16), storing the measured amount of gas present in the composite pressure vessel in the memory and/or
ii. a receiver (31,32, 33,34) and/or
iii. a user (31, 33, 34), and/or
iv. displaying the information to a user (31,33).

10. Method according to claim 9 wherein the power unit (17) is an energy harvester (17) that gathers energy from an ambient radio frequency spectrum.

11. Method according to ant one of the claims 9-10 wherein the system comprises a temperature sensor (18) for measuring the temperature of the composite pressure vessel and a pressure sensor (10) for measuring the pressure within the pressure vessel, and the method comprises calculating the amount of gas in the composite pressure vessel based on the measured temperature, the measures pressure and the measured level of gas in liquid form in the composite pressure vessel.

12. A composite pressure vessel comprising a system for measuring the amount of gas left according to any one of the claims 1-8.

13. Composite pressure vessel according to claim 12, wherein the composite pressure vessel is a cylindrical vessel arranged for a vertical alignment of the cylinder axis, wherein the sensor unit (5) is arranged vertically on the inner liner (4).

## Patentansprüche

1. System zum Messen des Gasstands in flüssiger Form in einem Verbunddruckbehälter, der elektrische Kapazität verwendet, um das Messen durchzuführen, wobei das System Folgendes umfasst:
• eine kapazitive Messeinheit (8) zum Messen des Gasstands in flüssiger Form in dem Druckbehälter,
• mindestens zwei Sensorelektroden (9), die mit der kapazitiven Messeinheit (8) verbunden sind,
• eine Kommunikationseinheit (7) zum Kommunizieren der durch die kapazitive Messeinheit (8) gemessenen Informationen und
• eine Leistungseinheit (17) zum Zuführen von Leistung zu mindestens einer von den mindestens zwei Elektroden, der kapazitiven Messeinheit (8) und der Kommunikationseinheit (7), **dadurch gekennzeichnet, dass**
die kapazitive Messeinheit (8) und die Sensorelektroden (9) in Form eines länglichen Streifens vorliegen, der so angeordnet ist, dass er sich im Wesentlichen über die vertikale Höhe einer Innenauskleidung des Verbunddruckbehälters erstreckt.

2. System nach Anspruch 1, wobei die mindestens zwei Elektroden mindestens eine Übertragungselektrode und mindestens eine Empfangselektrode mit ineinandergreifenden Fingern umfassen.

3. System nach Anspruch 2, wobei eine Sensoreinheit (5) einen Referenzpunkt (11), der sich nahe einem ersten Ende der Sensoreinheit (5) befindet, um an dem Verbunddruckbehälter auf einem Niveau angeordnet zu sein, auf dem das Gas stets in flüssiger Form vorliegt, und einen Referenzpunkt (6), der nahe einem zweiten Ende der Sensoreinheit (5) angeordnet ist, um an dem Verbunddruckbehälter auf einem Niveau angeordnet zu sein, auf dem das Gas stets in Gasform vorliegt, aufweist.

4. System nach einem der Ansprüche 1-3, wobei die Leistungseinheit (17) ein Energieernter (17) ist.

5. System nach einem der Ansprüche 1-4, wobei die Kommunikationseinheit (7) eine Nahbereichsfunkkommunikationseinheit (7) zum Kommunizieren von durch die kapazitive Messeinheit (8) gemessenen Informationen an einen Empfänger (31, 32, 33, 34) ist.

6. System nach Anspruch 5, wobei die dem Benutzer angezeigten Informationen entweder die in dem Druckbehälter verbleibende Gasmenge oder die Gasmenge in flüssiger Form in dem Behälter sein können.

7. System nach Anspruch 5, wobei der Empfänger eine Anzeige (33) ist, die sich an dem Verbunddruckbehälter befindet ist und die in dem Verbunddruckbehälter verbleibende Gasmenge anzeigt.

8. System nach einem der Ansprüche 1-7, wobei das System ferner einen Temperatursensor (18), einen Drucksensor (10) und eine Speichereinheit (16) umfasst.

9. Verfahren zum digitalen Überwachen des Gasstands in flüssiger Form in einem Verbunddruckbehälter, der aus mindestens einer gasdichten Innenauskleidung (4) im Inneren einer Schicht aus Verbundmaterial hergestellt ist, wobei das System eine Sensoreinheit (5) umfasst, die an der Auskleidung des Verbunddruckbehälters angebracht ist und die elektrische Kapazität verwendet, um die in dem Behälter vorhandene Gasmenge zu messen, wobei die Sensoreinheit (5) Folgendes umfasst: - eine kapazitive Messeinheit (8) zum Erfassen der Gasmenge in dem Druckbehälter, - mindestens zwei Sensorelektroden (9), die mit der kapazitiven Messeinheit (8) verbunden sind, wobei die kapazitive Messeinheit (8) und die Sensorelektroden (9) in Form eines länglichen Streifens vorliegen, der so angeordnet ist, dass er sich im Wesentlichen über die vertikale Höhe einer Innenauskleidung des Verbunddruckbehälters erstreckt, - eine Kommunikationseinheit (7) zum Kommunizieren der verbleibenden Gasmenge, die durch die kapazitive Messeinheit (8) erfasst wird, und eine Leistungseinheit (17) zum Zuführen von Leistung zu der kapazitiven Messeinheit (8), den Elektroden (9) und der Kommunikationseinheit (7);
wobei das Verfahren die folgenden Schritte umfasst:
• Zuführen von Leistung von der Leistungseinheit (17) zu der kapazitiven Messeinheit (8), mindestens einer der Elektroden (9) und der Kommunikationseinheit (7);
• Messen der in dem Verbunddruckbehälter vorhandenen Gasmenge mit der kapazitiven Messeinheit (8) anhand absoluter oder relativer Änderungen der elektrischen Kapazität,
• Kommunizieren der gemessenen vorhandenen Gasmenge mit der Kommunikationseinheit (7) an
i. eine Speichereinheit (16), welche die gemessene in dem Verbunddruckbehälter vorhandene Gasmenge in dem Speicher speichert, und/oder
ii. einen Empfänger (31, 32, 33, 34) und/oder
iii. einen Benutzer (31, 33, 34), und/oder
iv. Anzeigen der Informationen an einen Benutzer (31, 33).

10. Verfahren nach Anspruch 9, wobei die Leistungseinheit (17) ein Energieernter (17) ist, der Energie aus einem Umgebungsfunkfrequenzspektrum sammelt.

11. Verfahren nach einem der Ansprüche 9-10, wobei das System einen Temperatursensor (18) zum Messen der Temperatur des Verbunddruckbehälters und einen Drucksensor (10) zum Messen des Drucks innerhalb des Druckbehälters umfasst und das Verfahren Berechnen der Gasmenge in dem Verbunddruckbehälter auf Grundlage der gemessenen Temperatur, des gemessenen Drucks und des gemessenen Gasstands in flüssiger Form in dem Verbunddruckbehälter umfasst.

12. Verbunddruckbehälter, umfassend ein System zum Messen der verbleibenden Gasmenge nach einem der Ansprüche 1-8.

13. Verbunddruckbehälter nach Anspruch 12, wobei der Verbunddruckbehälter ein zylindrischer Behälter ist, der für eine vertikale Ausrichtung der Zylinderachse angeordnet ist, wobei die Sensoreinheit (5) vertikal an der Innenauskleidung (4) angeordnet ist.

## Revendications

1. Système de mesure du niveau de gaz sous forme liquide dans un récipient sous pression composite qui utilise une capacité électrique pour réaliser la mesure, dans lequel le système comprend :
• une unité de mesure capacitive (8) pour mesurer le niveau de gaz sous forme liquide dans le récipient sous pression,
• au moins deux électrodes de capteur (9) connectées à l'unité de mesure capacitive (8),
• une unité de communication (7) pour communiquer les informations mesurées par l'unité de mesure capacitive (8), et
• une unité d'alimentation (17) pour alimenter en puissance au moins l'une parmi les au moins deux électrodes, l'unité de mesure capacitive (8) et l'unité de communication (7), **caractérisé en ce que**
l'unité de mesure capacitive (8) et les électrodes de capteur (9) se présentent sous la forme d'une bande allongée agencée pour s'étendre sensiblement sur la hauteur verticale d'une doublure intérieure du récipient sous pression composite.

2. Système selon la revendication 1 dans lequel les au moins deux électrodes comprennent au moins une électrode émettrice et au moins une électrode réceptrice avec des doigts interdigités.

3. Système selon la revendication 2, dans lequel une unité de capteur (5) a un point de référence (11) situé à proximité d'une première extrémité de l'unité de capteur (5) à disposer sur le récipient sous pression composite à un niveau où le gaz est toujours sous forme liquide et un point de référence (6) situé à proximité d'une deuxième extrémité de l'unité de capteur (5) à disposer sur le récipient sous pression composite à un niveau où le gaz est toujours sous forme gazeuse.

4. Système selon l'une quelconque des revendications 1 à 3, dans lequel l'unité d'alimentation (17) est un collecteur d'énergie (17).

5. Système selon l'une quelconque des revendications 1 à 4, dans lequel l'unité de communication (7) est une unité de communication radio à courte portée (7) pour communiquer des informations mesurées par l'unité de mesure capacitive (8) à un récepteur (31, 32, 33, 34).

6. Système selon la revendication 5, dans lequel les informations affichées à l'utilisateur peuvent être la quantité de gaz restant dans le récipient sous pression ou la quantité de gaz sous forme liquide dans le récipient.

7. Système selon la revendication 5, dans lequel le récepteur est un afficheur (33) situé sur le récipient sous pression composite affichant la quantité de gaz restant dans le récipient sous pression composite.

8. Système selon l'une quelconque des revendications 1 à 7, dans lequel le système comprend en outre un capteur de température (18), un capteur de pression (10) et une unité de mémoire (16).

9. Procédé de surveillance numérique du niveau de gaz sous forme liquide dans un récipient sous pression composite constitué d'au moins une doublure intérieure étanche au gaz (4) à l'intérieur d'une couche de matériau composite, dans lequel le système comprend une unité de capteur (5) fixée à la doublure du récipient sous pression composite qui utilise une capacité électrique pour mesurer la quantité de gaz présente dans le récipient, dans lequel l'unité de capteur (5) comprend : - une unité de mesure capacitive (8) pour détecter la quantité de gaz dans le récipient sous pression, - au moins deux électrodes de capteur (9) connectées à l'unité de mesure capacitive (8), l'unité de mesure capacitive (8) et les électrodes de capteur (9) se présentent sous la forme d'une bande allongée agencée pour s'étendre sensiblement sur la hauteur verticale d'une doublure intérieure du récipient sous pression composite, - une unité de communication (7) pour communiquer la quantité de gaz restant détectée par l'unité de mesure capacitive (8), et une unité d'alimentation (17) pour alimenter en puissance l'unité de mesure capacitive (8), les électrodes (9) et l'unité de communication (7) ;
dans lequel le procédé comprend les étapes suivantes :
• l'alimentation en puissance par l'unité d'alimentation (17) de l'unité de mesure capacitive (8), d'au moins une des électrodes (9) et de l'unité de communication (7) ;
• la mesure de la quantité de gaz présente dans le récipient sous pression composite avec l'unité de mesure capacitive (8) en utilisant des changements absolus ou relatifs de capacité électrique,
• la communication de la quantité mesurée de gaz présente avec l'unité de communication (7) à
i. une unité de mémoire (16), stockant la quantité mesurée de gaz présente dans le récipient sous pression composite dans la mémoire et/ou
ii. un récepteur (31, 32, 33, 34) et/ou
iii. un utilisateur (31, 33, 34), et/ou
iv. l'affichage des informations à un utilisateur (31, 33).

10. Procédé selon la revendication 9, dans lequel l'unité d'alimentation (17) est un collecteur d'énergie (17) qui collecte de l'énergie à partir d'un spectre de fréquence radio ambiant.

11. Procédé selon l'une quelconque des revendications 9 à 10, dans lequel le système comprend un capteur de température (18) pour mesurer la température du récipient sous pression composite et un capteur de pression (10) pour mesurer la pression à l'intérieur du récipient sous pression, et le procédé comprend le calcul de la quantité de gaz dans le récipient sous pression composite sur la base de la température mesurée, de la pression mesurée et du niveau mesuré de gaz sous forme liquide dans le récipient sous pression composite.

12. Récipient sous pression composite comprenant un système pour mesurer la quantité de gaz restant selon l'une quelconque des revendications 1 à 8.

13. Récipient sous pression composite selon la revendication 12, dans lequel le récipient sous pression composite est un récipient cylindrique agencé pour un alignement vertical de l'axe de cylindre, dans lequel l'unité de capteur (5) est agencée verticalement sur la doublure intérieure (4).
